# EUROPEAN PATENT APPLICATION

(11) **EP 1 950 647 A2**
(43) Date of publication of application: **30.07.2008**
(21) Application number: 08150240.3
(22) Date of filing: 14.01.2008
(51) Int. Cl.: G06F 3/023, B60K 35/00

(54) **Display system**

(30) Priority: 27.01.2007 GB 0701572
(71) Applicant: Nissan Motor Manufacturing (UK) Ltd., Cranfield, Bedfordshire MK43 0DB (GB)
(72) Inventor: Patel, Bharat, Cranfield, Bedfordshire MK43 0DB (GB); Picton, Richard, Cranfield, Bedfordshire MK43 0DB (GB); Bradley, Andrew, Cranfield, Bedfordshire MK43 0DB (GB); Oxtoby, Dave, Cranfield, Bedfordshire MK43 0DB (GB); Cain, Peter, Cranfield, Bedfordshire MK43 0DB (GB); Norfolk, Laurence, Cranfield, Bedfordshire MK43 0DB (GB); Linfoot, Zagan, Cranfield, Bedfordshire MK43 0DB (GB)
(74) Representative: Hufton, Victoria Alice

(57) **Abstract**

The invention relates to a display system for use in a vehicle, the display system comprising: display means for displaying a single text-line (134) comprising a data-entry zone (148) and a data-selection zone (150); controller means for controlling the data displayed in the data-selection zone and for selecting data displayed within the data-selection zone for display in the data-entry zone.

## Description

This invention relates to a display system. In particular, the invention relates to a display system for an in-vehicle entertainment system such as an In-Car Entertainment (ICE) system including a central user-interface or 'head-unit' for controlling different functions of the ICE system and related methods of operation.

In a vehicle context, the head-unit of an ICE system acts as a central control module through which the user can change the settings of entertainment units, such as a radio or a CD player, which form part of the ICE system. The status of the functions of the entertainment units, such as which music source is playing, which radio station is tuned in or which music track number is playing, is known by reading a display of the ICE system e.g. a liquid crystal display (LCD). The functions are controllable using a manually operated keypad and feedback is received via the display.

Traditionally, ICE systems consisted of a radio only and required only a small amount of user interaction to control the radio functions, such as tuning and volume control. Nowadays, as technology develops and the packaging size of electronic devices is reduced, an increasing number of media devices are engineered into ICE systems. For example, ICE systems now incorporate MP3 players, DVD players, vehicle navigation systems, telephones and televisions.

Entering data associated with navigation system and telephone functionality, for example names, addresses, postcodes, contact names and telephone numbers etc, can be a difficult task. In order to facilitate operation of modern ICE systems, it is therefore necessary to provide a relatively large keypad and a large display to enable control of all the various media devices. However, a head-unit provided with a large keypad can be less aesthetically pleasing and is often complex to use, with just a few buttons providing several different functions and requiring detailed knowledge of the operating criteria for the buttons. Similarly, large displays are costly and occupy a large amount of space in a vehicle cabin, thus limiting the freedom of those who style the vehicle interior.

In a broad sense, the invention resides in a display system which provides a means for managing data entry and display within an ICE system in a more convenient manner.

Accordingly, in an advantageous aspect, the invention resides in a display system for use in a vehicle, the display system comprising: display means for displaying a single text-line comprising a data-entry zone and a data-selection zone; controller means for controlling the data displayed in the data-selection zone and for selecting data displayed within the data-selection zone for display in the data-entry zone.

The data in the data-selection zone may be simultaneously shown in the data-entry zone. This is advantageous because, when selecting data, a user can appreciate that there is a relationship between each zone because a change in the display in the data-selection zone occurs also in the data-entry zone simultaneously.

Moreover, the invention is not restricted to those displays featured on an ICE system, such as a 'head-unit', and can equally be applied to any display means, such as a computer monitor, television, games console and the like.

The ability of the user to select information for data entry whilst being able to see the information that has already been selected, provides an ergonomic and convenient way for a user to enter data in the system.

The data-selection zone may display data in the form of a block of text from which a symbol is selected for display in the data-entry zone. The benefit of having a block of text from which a user can select a symbol is that several symbols are visualised at once. The block of text from which a symbol is selected may be an odd number of symbols in the data-selection zone so that there may be a symbol that is central amongst the symbols within the block of text. Alternatively, the block of the text may be only a single symbol in the data-selection zone. A centre symbol of the block, or active symbol, may be a flashing symbol indicating the symbol is active and selectable for entry into the data entry area of the display.

The block of text may be selected from a predetermined group of symbols. The predetermined group of symbols may comprise a link-symbol that represents an alternative predetermined group of symbols. When the link-symbol is selected, this results in the alternative predetermined group of symbols being displayed in the data-selection zone. The link-symbol makes it easier for a user to navigate from one group of symbols to another by minimising the number of button presses. The predetermined group of symbols may comprise an 'OK' symbol that, when selected, stores the symbols within the data-entry zone to a memory.

The data-entry zone may be immediately adjacent to the data-selection zone. The visual convenience for a user is improved when the data-entry zone is arranged next to the data-selection zone.

The single text-line may form a single display line of at least a dual text-line display. Alternatively, the single text-line may be defined by a predetermined zone or single line of a multi-dimensional display. A multi-dimensional display may comprise a plurality of predetermined zones in which the single text-line is shown.

The reference to a text-line is intended to mean a display for any line of text in the form of letters (of any alphabet), numbers, symbols, characters, icons or any other graphical or textual representations.

Furthermore, in a second aspect of the invention, a method for displaying text on a single text-line display comprises: displaying data within a data-selection zone of the single text-line display, and selecting data displayed within the data-selection zone for display within a data-entry zone of the single text-line display. The data selected to be displayed in the data-selection zone may be simultaneously displayed in the data-entry zone of the single text-line display.

Preferred and/or optional features of the first aspect of the invention may be implemented by the method of the second aspect of the invention also.

In order that the invention may be more readily understood, reference will now be made, by way of example, to the accompanying drawings in which:
Figures 1 (a) to (d) are schematic diagrams of known ICE system head-units illustrating a range of different keypads and sizes of displays;
Figure 2 is a face-view of a known ICE system head-unit featuring a single-line display to which the invention is applied;
Figure 3 is a detailed view of the single-line display in Figure 2, to which the invention is applied;
Figure 4 is a block diagram to show the functions of the ICE system in Figure 2;
Figure 5 is a flow diagram showing the sequence of menu titles displayed by the ICE system of Figure 4;
Figure 6 is a diagram showing an example of a text-line on the display in Figure 3 and Figure 4;
Figure 7 is a diagram showing the groups of characters that the single-line display in Figure 3 can display;
Figure 8 illustrates the sequence of steps involved in entering a contact name 'DAD' onto the display of Figure 3;
Figure 9 illustrates the sequence of steps involved in entering a contact number 123 onto the display of Figure 3; and
Figure 10 illustrates the sequence of steps involved, by continuing on from the steps of Figure 8, to enter a contact name 'DAD@' onto the display of Figure 3.

Vehicles having an In-Car Entertainment (ICE) system include a central user-interface or 'head-unit' for controlling different entertainment functions of the system. The status of various parameters of the entertainment functions is changeable using buttons upon a keypad of the system or by means of voice-control. Feedback to the user that a parameter has been changed or data has been correctly entered is shown on a display of the ICE system.

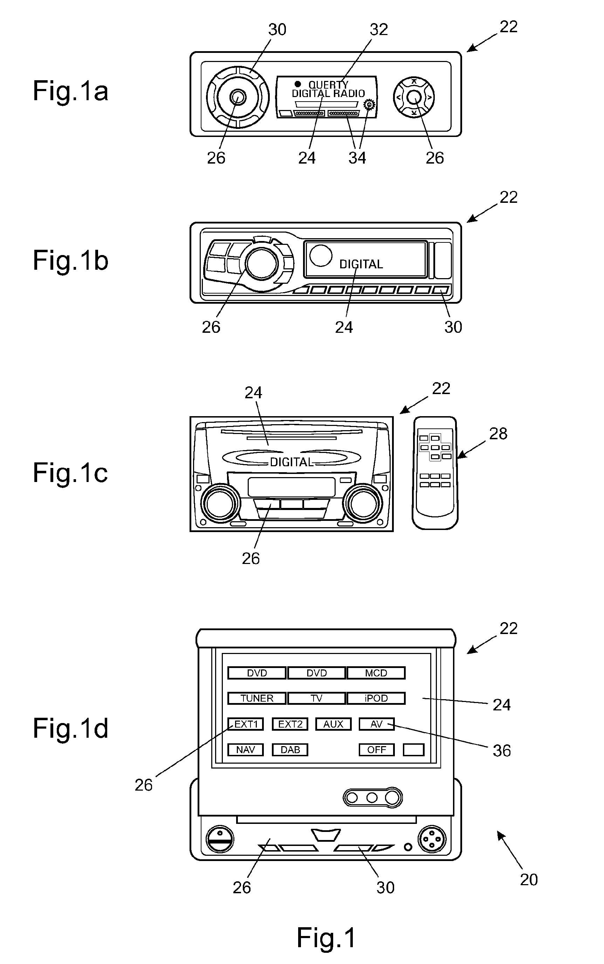

Figures 1(a) to (d) show examples of known ICE system head units 20, each having a facia 22 consisting of a display 24 and a keypad 26 to control the functions within the ICE system.

Figure 1(a) and Figure 1(b) show examples of a facia 22 having a dimension of an industry standard size referred to as a '1-DIN'. Upon the 1-DIN facia 22, the display 24 and the keypad 26 occupy the majority of the facia 22. To make efficient use of the space provided, buttons 30 for controlling system functions are often small so that many buttons can be packaged within the relatively small space. Moreover, the display 24 is a complex mix of symbols and/or text-parameters, the aim of which is to show the status of as many functions of the ICE system as possible. The display 24 in Figure 1(a) occupies approximately one-third of the facia 22 area and consists of two lines of text 32 and several picture icons 34.

Figure 1 (c) shows an example of a 2-DIN head-unit. A 2-DIN head-unit is twice the height of, but the same width as, a 1-DIN head-unit. The head-unit is accompanied by a remote-control unit 28 providing a user with the ability to operate the ICE system without operating the keypad 26 on the 2-DIN facia 22. The larger facia of the 2-DIN head-unit allows the size of the display 24 to be increased but does not necessarily simplify the system as a detailed knowledge of operating criteria is still required.

Figure 1(d) shows a still larger display 24 of an ICE head-unit. In this instance, the keypad 26 is small in size and the LCD display 24 is of touch-screen type. The touch-screen LCD display 24 incorporates touch-screen buttons 36 to provide a keypad separate from the push-button keypad 26.

The head-units shown in Figure 1 are not favoured by original engineering manufacturers (OEMs) because they either occupy too much space on the vehicle dashboard and/or they require complex operating steps which are inconvenient to the user.

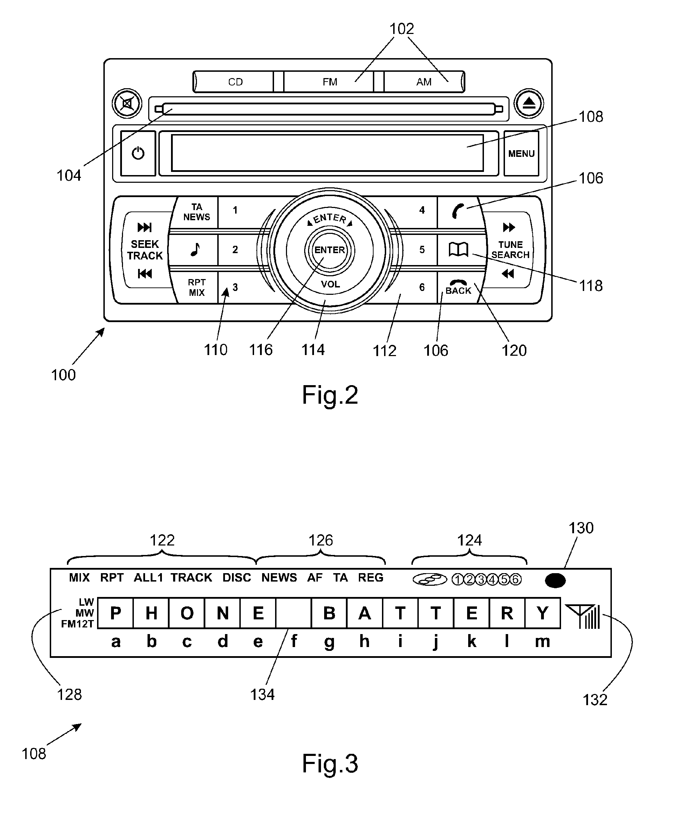

Referring to Figure 2, a head-unit 100 to which the invention is applied comprises buttons 102, 104, 106 for operating a radio, a CD player and a telephone respectively. The head-unit 100 also includes a display 108 and a control means having a keypad 110 which is provided with large evenly distributed keypad-buttons 112 and a rotary-selector 114. The rotary-selector 114 is located centrally on the facia 22 immediately below the display 108 with a select-button 116 being provided on the centre of the rotary-selector 114. The rotary-selector 114 is an infinite rotation type encoder which allows a user to change or modify settings, such as the volume or radio station frequency, by operation of the rotary-selector alone, without the user needing to press one of the buttons 112. The select-button 116 is labelled 'enter' to indicate to a user that pressing the select-button will 'enter' data, or select data for entry, into the head-unit 100.

Alternatively, the rotary encoder 114 may be replaced with another encoder/user-interface (not shown) that provides comparable convenience to a user. Such a user interface may include voice activation technology, facial recognition technology, tilt-sensing technology and the like.

Of particular significance is that the head-unit 100 comprises a small, monochrome LCD-type display 108 on the facia 22. Whereas the prior art illustrated in Figure 1 has several lines of text and multiple zones, the display 108 of the invention is one-dimensional and includes only a single text-line split into two zones.

The rotary-selector 114 is configured with haptic feedback. Haptic feedback gives a small but noticeable feedback sensation on the fingers of the user when turning the rotary-selector 114 through a predetermined degree of rotation. Each haptic-step is equivalent to a positive activation of the keypad 110. The manual effort of each haptic-step is low and favourable compared with a conventional keypad from a perceived quality perspective.

To make it possible for the head-unit 100 to operate with telephone functionality, the display 108 and the rotary-selector 114 allow a user to access and record contact details using a number of predetermined menus, functions, symbols and characters.

For ease of use, the keypad 110 is provided with specific buttons for providing access to particular functions, such as a phone-book button 118 for accessing and entering contact names and numbers and a back-button 120 for navigating a menu system or deleting a data entry.

Figure 3 shows the LCD display 108 of the head-unit 100 in Figure 2 in a display mode in which characters are displayed. The display 108 comprises elements in the form of icons which turn on or off depending on the status of the function they represent. The icons indicate CD setting status 122, active CD status 124, radio setting status 126, radio bandwidth selected 128, BluetoothTM connection status 130 and telephone signal strength indicator status 132. In addition, a text-line portion 134 of the display 108 is comprised of thirteen individual dot-matrix type LCD elements which can be turned on and off to represent a range of numbers, symbols of the alphabet or any other type of icon. The left-most cell is referred to as 'cell-1' 134a with the next cell to the right being 'cell-2' 134b, and so on through to 'cell-13' 134m. By way of example, in Figure 3 cell-1 134a displays the symbol 'P', cell-2 134b displays the symbol 'H', in cell-3 134c displays the symbol 'O' and so on. Across the text-line 134, the symbols 'P-H-O-N-E - B-A-T-T-E-R-Y' are illustrated.

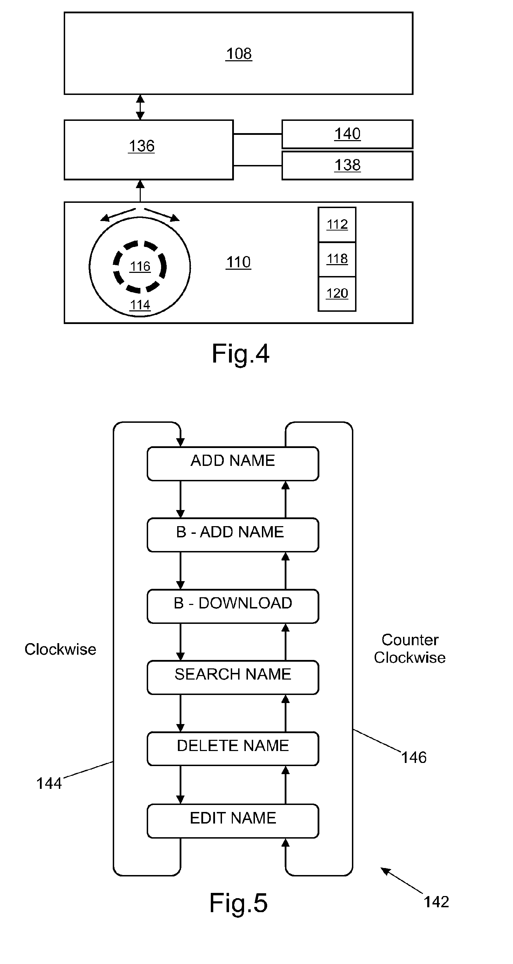

Figure 4 is a block diagram representing the ICE system shown in Figure 2. The block diagram illustrates the main components required for entering a name and number into a memory of the system. The buttons 112 of the keypad 110, the rotary-selector 114 and the select-button 116 are connected to a controller 136 of the control means. The controller 136 is connected to the display 108, the memory 138 and a BluetoothTM communication module 140.

The phone-book button 118, the back-button 120 and the select-button 116 on the keypad 110 are conventional normally-open type switches located behind the facia 22 of the head-unit 100 and connected to the controller 136. The rotary-selector 114 is also connected to the controller 136. The controller 136 detects and counts the number and direction of haptic-steps the rotary-selector 114 makes when turned by the user.

The controller 136 is a conventional micro-processor which, in addition to controlling inputs from the keypad 110, also functions as a display-driver. The controller 136 changes the status of the display 108 in accordance with the commands input by the user via the keypad 110.

The telephone functions of the head-unit 100 are managed by the controller 136. When the telephone-button 118 is pressed, the controller 136 activates the display 108 to show the menu title ADD NAME on the text-line 134. When ADD NAME is displayed on the text-line 134 this indicates that the phone-book function has been activated.

Figure 5 is a flow diagram 142 indicating the phone-book functions available via a menu and the order in which they can be selected by operation of the rotary-selector 114. The words ADD NAME shown on the display 108 in Figure 4 represent one of a series of menu headings indicative of the phone-book functions. Selecting a phone book function requires the user to turn the rotary-selector 114 by an appropriate number of haptic-steps in either a clockwise or anticlockwise direction until the required function is displayed. Each haptic-step of the rotary-selector sends a signal to the controller 136 which in turn changes the menu heading indicated on the display 108.

From the initial starting position of the menu heading with ADD NAME displayed, a haptic-step clockwise rotation 144 of the rotary-selector 114 sends a signal to the controller 136 which in turn changes the display 108 from the words ADD NAME to the words B-ADD NAME. A further clockwise rotation changes the display 108 from the words B-ADD NAME to the words B-DOWNLOAD. When in a position in which the menu heading with B-DOWNLOAD is displayed, a counter-clockwise rotation 146 of the rotary-selector 114 changes the display 108 to the words B-ADD NAME (i.e. in the reverse direction through the menu).

The menu titles displayed on the text-line 134 represent a menu function which the user can select using the select button 116 on the rotary-selector 114. When the words ADD NAME are shown on the display 108 the select-button 116 is pressed to enter the ADD NAME function. Pressing the select-button 116 sends a signal to the controller 136 which in turn changes the display 108 to enable a name to be added.

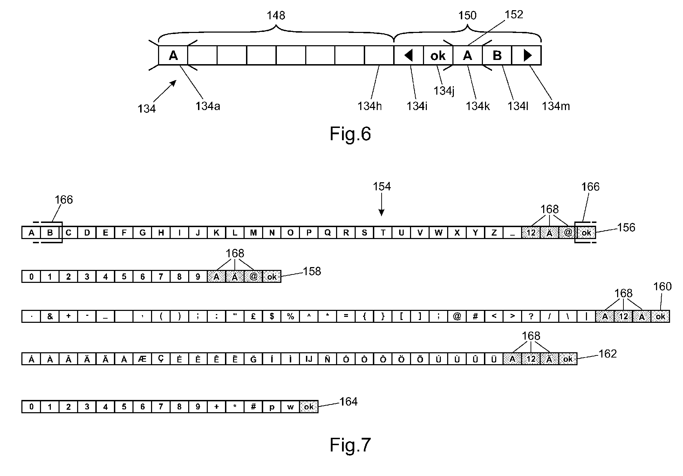

Figure 6 shows the display 108 during a data entry mode of operation. The text-line 134 is split into two zones: a data-entry zone 148 comprising cell-1 134a through to cell-8 134h and a data-selection zone 150 comprising cell-9 134i through to cell-13 134m. The data-entry zone 148 is used to display data entered by the user and the data-selection zone 150 presents the symbols that can be entered to make up the contact name or number in the data-entry zone 148.

Cell-9 134i and cell-13 134m are dedicated to showing a left-arrow and a right-arrow respectively. The three cells in between, cell-10 134j, cell-11 134k and cell-12 1341, indicate to the user where, from a group of symbols, a selection can be made from. An active symbol 152, in the centre of the data-selection zone 150 at cell 11 134k, flashes on and off intermittently to indicate the active symbol 152 which can be selected by the user.

On entering the ADD NAME function the data-entry zone 148 is initially blank from cell-2 134b through to cell-8 134h. In the data-selection zone 150, between the left-arrow and the right-arrow respectively, cell-10 134j indicates an 'OK' symbol, cell-11 134k indicates a flashing symbol 'A' and cell-12 1341 indicates a symbol 'B'.

Figure 7 shows a selection of groups 154 of symbols that can be shown in the data-selection zone 150. Each group 154 is shown in a series order which determines which symbols the controller 136 can select to show in the data-selection zone 150. The five groups 154 comprise symbols which can be displayed in any one of the thirteen cells of the text-line 134. The groups of symbols include a group of alphabetic symbols 156, a group of numerical symbols 158, a group of ASCII-type symbols 160, a group of accented symbols 162 and a group of telephone symbols 164 that are suitable for use when automatically dialling a telephone.

Upon entering the ADD NAME function the symbols shown in the text-line 134 are selected from the alphabetic group 156. The alphabetic group 156 begins with the symbols A, B, C through to X, Y, Z and ends in the symbol OK. The symbols shown in the data-selection zone 150 are displayed under the control of the controller 136 in a block 166 of three symbols which are adjacent to one another in the alphabetic series. The default view of the data-entry zone 150 represents the block 166 wrapped around the end of the alphabetic group 156 to include the end of the alphabetic group 156 and the first two symbols of the alphabetic group 156, thus showing the symbols OK, A and B.

To change the symbol within the data-selection zone 150, the user turns the rotary-selector 114 and with each haptic-step the controller 136 changes the block 166 of three adjacent symbols by one position in the group. Therefore, if the rotary-selector 144 is turned one haptic-step clockwise the controller 136 changes the display 108 from 'OK', 'A' and 'B' to show the symbols 'A', 'B' and 'C'. The controller 136 also changes the text-line 134 so that the first symbol in the data-entry zone 148 of the text-line changes to correspond with the active symbol 152 of the data-selection zone 150. In other words, turning the rotary-selector 114 by one clockwise haptic-step changes the flashing symbol 'A' in the data-entry zone 148 to a flashing symbol 'B'.

Once the required active symbol 152 is flashing, the select-button 116 is pushed on the rotary-selector 114 to confirm the selection of the symbol into the data-entry zone 148.

If the user wants to change the group 154 of symbols in the data-selection zone 150, the rotary-selector 114 is rotated until one of the three link-symbols 168 is shown as the active symbol 152. Each group 156, 158, 160, 162, 164 comprises three link-symbols 168. For example, the alphabetic-group 156 comprises a '12' representing the number group 158, an 'A' representing the accented-group 162 and an '@' representing the ASCII-group 160. If the '@' symbol is selected in the alphabetical group 156 the controller 136 changes the text-line 134 to show a block of three symbols from the ASCII-group 160. As before, the block is first viewed wrapped around the end of the series to include the end symbol of the ASCII-group 160 and the first two symbols, thus showing the symbols 'OK', '.' and '&'.

By way of further example, when the user selects the link symbol '12' from the alphabetic group 156 using the select-button 116 on the rotary-selector 114, the controller 136 changes the data-selection zone 150 to show symbols from the numerical group 158.

The 'OK' symbol is available in each of the groups 156, 158, 160, 162, 164. When 'OK' is the active symbol 152 in the data-selection zone 150 and is selected by the select-button 116, the controller 136 saves the data shown in the data-entry zone 148 to the memory 138.

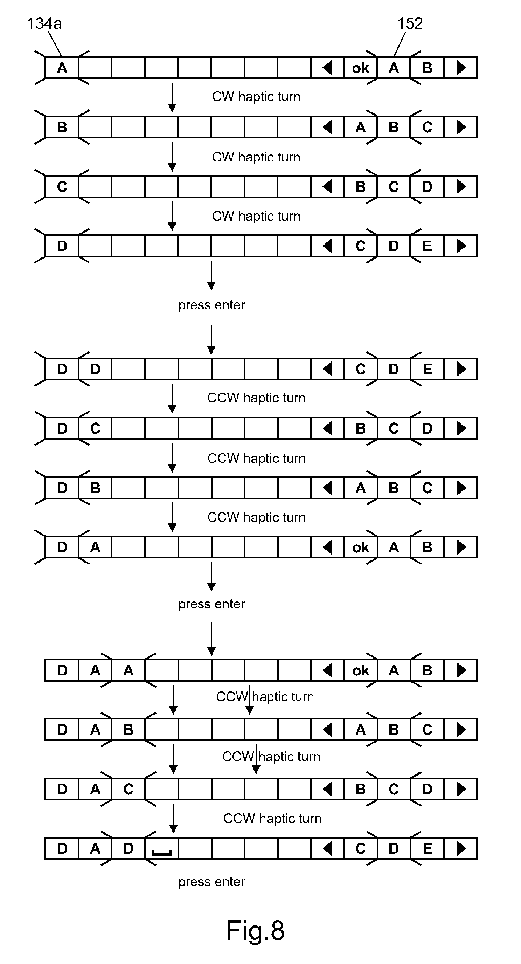

Figure 8 follows the steps required to enter a contact name 'DAD' into the memory 138. First, the phone-book button 118 upon the keypad 110 is pressed. The controller 136 detects the phone-book button 118 being pressed and changes the display 108 to show the ADD NAME function heading. The ADD NAME function is activated by pressing the select-button 116. The data-selection zone 150 shows the block 166 of three adjacent symbols of the alphabetic group 156, 'OK', 'A' and 'B', as explained previously.

To change the text within the data-selection zone 150, the user turns the rotary-selector 114. With each haptic-step detected, the controller 136 increments by one symbol the block 166 of three adjacent symbols selected from the alphabetic group 156. Therefore, if the rotary-selector 114 is turned one haptic-step clockwise the controller 136 changes the display 108 from the symbols 'OK', 'A' and 'B' to show the symbols A, B and C. The controller 136 also changes the text-line 134 so that the first symbol 134a in the data-entry zone 148 of the text-line 134 changes to correspond with the active symbol 152 of the data-selection zone 150. Turning the rotary-selector 114 by one clockwise haptic-step therefore changes the flashing symbol 'A' to a flashing symbol 'B'. Therefore, when the user turns the rotary-selector 114 by three clockwise haptic-steps, the controller 136 detects the turns and changes the symbols in the data-selection zone 150 to display the symbols 'C', 'D' and 'E'. The controller 136 displays the flashing symbol 'D' in cell-1 134a, corresponding to the flashing symbol 'D' in cell-11 134k.

To select the symbol 'D', the select-button 116 on the rotary-selector 114 is pressed once (as indicated by 'press enter') to confirm symbol 'D' in cell-1 134a. Upon pressing the select-button 116, the symbol in cell-1 134a therefore stops flashing and a flashing cursor symbol appears in cell-2 134b indicating that cell-2 is now active. The data-selection zone 150 remains unchanged. Pressing the select-button 116 once more activates cell-2 134b to display a flashing 'D'. Again, the user turns the rotary-selector 114 which in turn is detected by the controller 136 which changes the block of symbols displayed from the alphabetic group 156. By turning the rotary-selector 114 counter-clockwise by three haptic-steps, the controller 136 will change the active symbol 152 to symbol 'A' and cell-2 134b also changes to display a flashing symbol 'A'. Once more, the select-button 116 is pressed to select the symbol 'A' into cell 2 134b. Cell-2 134b stops flashing and a flashing cursor symbol appears in cell-3 134c indicating that cell-3 is now active. The symbols 'D' and 'A' are now shown in cell-1 134a and cell-2 134b respectively.

Pressing the select-button 116 again activates cell-3 134c to display a flashing symbol 'A'. By turning the rotary-selector 114 clockwise by three haptic-steps the controller 136 changes the active symbol 152 and cell-3 134c to display a flashing symbol 'D'. Pressing the select-button 116 once more fixes the symbol 'D' in cell-3 134c and moves the cursor to cell-4 134d. 'DAD' is now shown in the data-entry zone 148 of the text-line 134 of the display 108.

To enter the contact name DAD to the memory 138, the user turns the rotary-selector 114 until 'OK' appears as the active symbol 152 in the data-selection zone 150. By pressing the select-button 116, the controller 136 stores the name DAD to memory 138.

After the controller 136 stores the name DAD to the memory 138, the controller 136 resets the text-line 134 to appear as it was when entering the ADD NAME function, but instead of selecting symbols from the alphabetic group 156 the symbols are selected from the telephone number group 164.

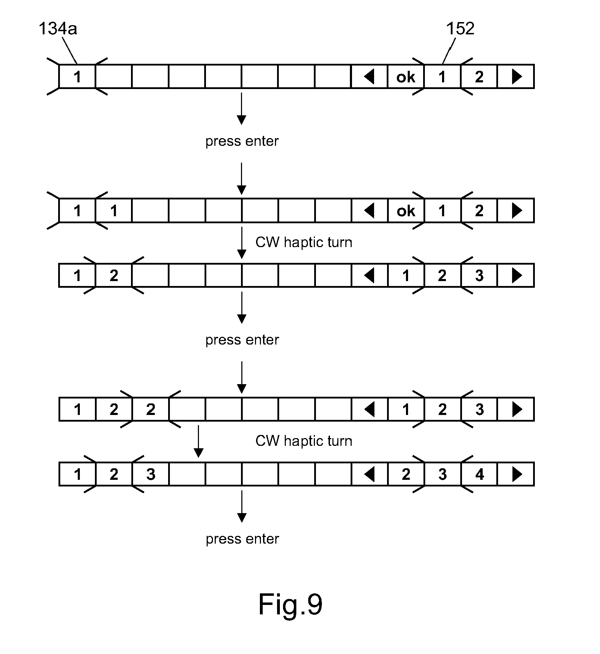

Figure 9 is a flow-diagram of the steps taken to enter the contact number '123' into the memory 138. Initially, the display 108 shows a flashing number '1' in cell-1 134a. The remainder of the data-entry zone 148, cell-2 134b through to cell-8 134h, is blank, as before, thus giving the impression of a space in which to enter the contact telephone number. Similarly, in the data-selection zone 150 of the text-line 134, between the left-arrow and the right-arrow respectively, cell-10 134j indicates the symbol 'OK', cell-11 134k indicates a flashing number '1' and cell-12 1341 indicates the number '2'.

In order to select the flashing number '1' in cell 1 134a, the user presses the select-button 116 of the rotary-selector 114. After pressing the select-button, cell-1 134a stops flashing and a flashing cursor symbol appears in cell-2 134b indicating that cell-2 is now active. Pressing the select-button 116 again activates cell-2 to display a flashing number '1'.

Changing the number within the data-selection zone 150 requires the user to turn the rotary-selector 114 by one haptic-step. The controller 136 detects the direction and number of the turns and changes the data-selection zone 150 to show the symbols '1', '2' and '3'. The controller 136 also changes the text-line 134 so that the number in cell-2 134b of the data-entry zone 148 changes to correspond with the active symbol 152 in the data-selection zone 150. The select-button 116 is pressed twice, first to stop the flashing of the symbol in the cell-2 134b and to confirm the data in the data-entry zone 148 and secondly to activate cell-3 134c to change the display 108 from a flashing cursor to a flashing number '2'.

The number in the data-selection zone 150 is changed again by turning the rotary-control 114 by one haptic-step clockwise. The controller 136 detects the direction and number of the turns and changes the data-selection zone 150 to show the symbols '2', '3' and '4'. Simultaneously, the controller 136 changes the display 108 on the text-line 134 so that the number in cell-3 134c of the data-entry zone 148 corresponds with the active symbol 152 of the data-selection zone 150.

Once more, the select-button 116 is pressed twice, first to stop cell-3 134c flashing and to confirm the data into the data-entry zone 148 and secondly to activate cell-4 134d to change the display 108 from a flashing cursor to a flashing number '3'.

As before, to store the contact number 123 to the memory 138, the user turns the rotary-selector 114 and 'OK' appears as the active symbol 152 in the data-selection zone 150. By pressing the select-button 116 the controller 136 stores the number 123 to the memory 138, as before, and then displays the word SAVED in the text-line 134.

In a further embodiment of the present invention, it is to be appreciated that a user entering a contact name to the head-unit 100, via the display 108, may be required to select symbols from a wider range of characters to represent the name they wish to enter to memory 136. Such circumstances may arise when the contact name is in a language other than English having accented symbols or ASCII characters.

A user is not required to continuously scroll, using the rotary-selector 114, through all of the available characters until they find a required symbol because the available characters are separated into different groups 156, 158, 160, 162, 164. It is advantageous to have different groups of symbols, each with a link symbol of symbols, as a user can enter a word or number more quickly than if only a single group is used. For example, referring back to Figure 7, if there were only a single group of user-selectable symbols providing the same choice to a user then such a group would consist of one hundred and twelve individual symbols. Instead, the user-selectable symbols are divided so that the group of alphabetic symbols 156 consists of twenty-seven symbols; the group of numerical symbols 158 consists of ten symbols; the group of ASCII-type symbols 160 consists of thirty-one symbols; the group of accented symbols 162 consists of twenty-nine symbols; and the group of telephone symbols 164 consists of fifteen symbols. By dividing the user-selectable symbols into groups 154 a user is able to select a preferred symbol more conveniently, quickly and efficiently.

To demonstrate the steps required to change the group, from which a user may select a symbol, the following example assumes that the steps taken to enter the contact name 'DAD', as already set-out in Figure 8, are used as a basis for entering the contact name 'DAD@' into the memory 138, with the symbol '@' being selected from a different group 160 to that from which the symbols 'DAD' are selected.

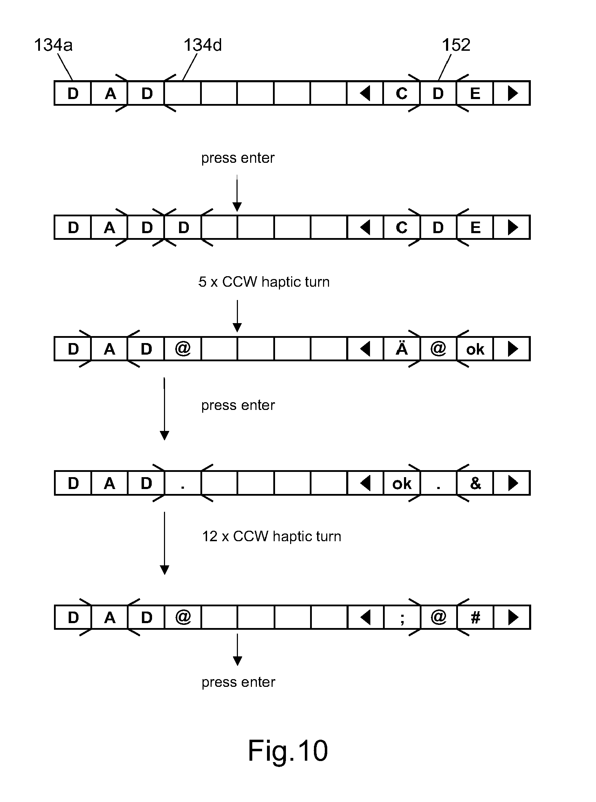

In Figure 10, the first step is the same step as the last step shown in Figure 8. Therefore, the steps shown in Figure 10 begin from the controller 136 displaying the flashing symbol 'D' in cell-3 134c of the data-entry zone 148, corresponding to the flashing symbol 'D' in cell-11 134k of the data-selection zone 150. Upon pressing the select-button 116 once, the controller 136 fixes the symbol D in cell-3 134c and displays a flashing symbol 'D' in cell-4 134d. As before, the data-selection zone 150 shows the corresponding block 166 of three adjacent symbols of the alphabetic group 156. These symbols are the symbols C, D and E.

By turning the rotary-selector 114 by five haptic-steps counter-clockwise, the controller 136 changes the block 166 of three adjacent symbols from the alphabetic group 156 to display the symbols 'A', '@' and 'OK'. With the symbol '@', which is a link-symbol 168, now being shown as the active symbol 152 in cell-11 134k, a user selects the link-symbol 168 to change the group from which the symbols are selected to that group which the '@' symbol represents (i.e. the ASCII-group 160).

When a user presses the select-button 116 the controller 136 changes the text-line 134 to show a block of three symbols which are adjacent one another in the ASCII-group 160. The symbols shown are 'OK', '.' and '&'.

As before, changing the text within the data-selection zone 150 requires the user to turn the rotary-selector 114. By turning the rotary-selector 114 by twelve haptic-steps counter-clockwise, the controller 136 increments by twelve symbols the block 166 of three adjacent symbols selected from the ASCII-group 160. The controller 136 changes the symbols in the data-selection zone 150 to display the symbols ';', '@' and '#'. The controller 136 displays the flashing symbol '@' in cell-4 134d of the data-entry zone 148, corresponding to the flashing symbol @ in cell-11 134k of the data-selection zone 150.

Finally, the select-button 116 is pressed to fix the symbol '@' into cell-4 134d. To enter the contact name 'DAD@' to the memory 138, the user turns the rotary-selector 114 until 'OK' appears as the active symbol 152 in the data-selection zone 150, then by pressing the select-button 116, the controller 136 stores the name 'DAD@' to the memory 138.

As before, the controller 136 resets the text-line 134 to appear as it was when entering the ADD NAME function, but instead of selecting symbols from the alphabetic group 156 the symbols are selected from the telephone number group 164.

Having described the preferred embodiments of the present invention, it is to be appreciated that the embodiment in question is exemplary only and that variations and modifications, such as will occur to those possessed of the appropriate knowledge and skills, may be made without departure from the scope of the invention as set forth in the appended claims.

For example, the head-unit 100 comprises a display 108 comprising only a single text-line 134. However, the invention can equally be applied to a multi-dimensional display (not shown), such as a dual text-line display, in which a single text-line 134 includes a data-selection zone 150 and a data-entry zone 148 as described previously.

At any point in the data entry routine, an error made while entering data into the data-entry zone 148 may be corrected by pressing the back-button 120. Specifically, a single symbol can be deleted by pressing the back-button 120 for less than, for example, 1 second. To delete the entire contents of the data-entry zone 148 the user presses the back-button 120 for more than 1 second.

Instead of the controller 136 displaying simultaneously the flashing symbol 'D' in cell-1 134a of the data-entry zone 148, corresponding to the flashing symbol 'D' in cell-11 134k of the data-selection zone 150, the controller 136 may alternatively show only the flashing active-symbol 152 in cell-11 134k of the data selection zone 150 without showing a flashing symbol in cell-1 134a in the data-entry zone 148.

## Claims

1. A display system for use in a vehicle, the display system comprising:
display means for displaying a single text-line comprising a data-entry zone and a data-selection zone;
controller means for controlling the data displayed in the data-selection zone and for selecting data displayed within the data-selection zone for display in the data-entry zone.

2. The system of Claim 1, wherein data in the data-entry zone is displayed simultaneously in the data-selection zone.

3. The system of Claim 1 or Claim 2, wherein the data-selection zone displays data in the form of a block of text from which a symbol is selected for display in the data-entry zone.

4. The system of Claim 3, wherein the block of text from which a symbol is selected displays an odd number of symbols in the data-selection zone.

5. The system of Claim 4, wherein the block of text from which a symbol is selected displays a single symbol in the data-selection zone.

6. The system of any of Claims 3 to 5, wherein the block of text is selected from a predetermined group of symbols.

7. The system of Claim 6, wherein the predetermined group of symbols comprises a link-symbol that represents an alternative predetermined group of symbols which, when selected, results in the alternative predetermined group of symbols being displayed in the data-selection zone.

8. The system of Claim 6 or Claim 7, wherein the predetermined group of symbols comprises a symbol that, when selected, results in the symbols displayed in the data-entry zone being stored to a memory.

9. The system of any preceding claim, wherein the data-entry zone is immediately adjacent to the data-selection zone.

10. The system of any preceding claim, wherein the single text-line forms a single display line of at least a dual text-line display.

11. A method for displaying text on a single text-line display, the method comprising:
displaying data within a data-selection zone of the single text-line display, and
selecting data displayed within the data-selection zone for display in a data-entry zone of the single text-line display.

12. The method of Claim 11, wherein the data selected to be displayed in the data-selection zone is simultaneously displayed in the data-entry zone of the single text-line display.
